# EUROPEAN PATENT APPLICATION

(11) **EP 1 296 259 A1**
(43) Date of publication of application: **26.03.2003**
(21) Application number: 01830601.9
(22) Date of filing: 25.09.2001
(51) Int. Cl.: G06F 17/60, H04L 29/06, H04L 29/08

(54) **Advanced system for managing electronic financial transactions**

(71) Applicant: GTP Holding S.p.A., 00196 Roma (IT)
(72) Inventor: Leonardo, Santo, 00196 Roma (IT)
(74) Representative: Leone, Mario

(57) **Abstract**

Advanced system for managing electronic financial transactions, comprising a plurality of terminal devices (10) connected to a data transmission network (11), apt to transmit and to receive data related to financial transactions, one managing unit (12), connected to said data transmission network (11), wherein the data transmission network (11) is based on a TCP/IP-type transport protocol.

## Description

The present invention relates to a system for managing electronic financial transactions, entirely based on TCP/IP protocol.

To date, the POS (Point of Sale) devices used to request the authorizations required in order to be capable of accepting a payment by credit card or other card types make use of common telephone lines to connect to the corresponding POS-managing bodies, typically consisting of banks.

The apparatuses used for this communication dialogue in asynchronous or synchronous mode according to traditional data transmission protocols, e.g., X28- or X25-type protocols.

Each POS manager is in turn connected to the managing bodies of the tradesperson ('Acquirer').

The Acquirers are in turn connected to bodies which issue the payment cards and manage the credit card holding members ('Issuer'). In short, the latter are the bodies appointed to authorize the expense.

The connections among POS manager, Acquirer and Issuer generally take place via dedicated channels or with packet switching networks (e.g., in Italy, the ITAPAC network).

The protocols underlying the abovedescribed interactions do not allow variations to the messages implementing the dialogue between the POS and the other involved entities. This makes it impossible to exploit the contact between the final transactors (the member and the tradesperson) and the managers of the various steps of the system (Acquirer and Issuer).

Lately, the interest in the attempt to implement a qualitatively improved contact in order to provide several useful services to members and tradespersons, like further tests to the ends of safety managing, or the possibility of a more effective information exchange, has increased.

A further problem of the actual flow is the very high managing cost of the networks and of the systems based on obsolete transport protocols, like the X25 or the X28. In fact, these systems typically are proprietary systems, therefore entailing payment.

Lately, several solutions have been advanced, even based on IP networks, focused on improving the connection between a terminal, e.g., a POS, and the managers thereof.

Alike systems provide POS terminals capable of dialoguing with the POS managing body via IP-type networks (e.g., the Internet), however the financial transaction is then carried out through a gateway which adapts the protocols used by the POS to the traditional messages of the circuit.

However, these solutions are no complete alternative to the use of traditional and dedicated networks, entailing the drawback of not allowing an enrichment of the information and of the data exchanged between the POS terminal and the Issuer or the Acquirer.

It is an object of the present invention to provide a system for managing electronic financial transactions, comprising:
- a plurality of devices, connected to a data transmission network, apt to transmit and to receive data related to financial transactions;
- a managing unit, connected to said data transmission network,
characterised in that said data transmission network is based on a TCP/IP-type transport protocol.

Therefore it is provided, according to the present invention, the implementation of a device for connecting to a data transmission network, characterized in that it comprises:
- a device for connecting to said network;
- input/output devices; and
a microprocessor control unit.

The main advantage of the system according to the present invention is provided by the fact that it allows a complete managing of the entire data flow from the POS terminals to the transaction managers (Acquirer and Issuer), entirely based on data transmission systems according to a TCP/IP protocol.

This enables to 'give up' altogether the traditional protocols, outdated and unsuited to follow the requirements of the market and of the technology, allowing the implementation of a system for managing electronic transactions having greater potential with respect to the current systems.

A second advantage is provided by the fact that the system according to the present invention can exploit public-type data transmission networks, e.g., the Internet, in order to implement connections between the subjects (member, and/or tradesperson) and the authorizing bodies (Acquirer and Issuer). Thus, by the way, it becomes possible to drastically abate the costs of the connections and of the data transmissions.

A third advantage of the system of the present invention is provided by the fact that it also allows direct connections between member and/or tradesperson (e.g., by means of a terminal having POS function) and the respective authorizing bodies (Acquirer and/or Issuer), connections to date practically unfeasible on traditional networks.

Further advantages, features and operation modes of the present invention will be made apparent in the following detailed description of preferred embodiments thereof, given by way of example and without limitative purposes, making reference to the figures of the attached drawings, wherein:
Fig. 1 is a block diagram of a traditional and currently used system for managing transactions;
Fig. 2 is a block diagram of a system for managing transactions according to the present invention; and
Figs. 3 to 5 are flow charts related to data managing at a POS, server and authorizing body level.

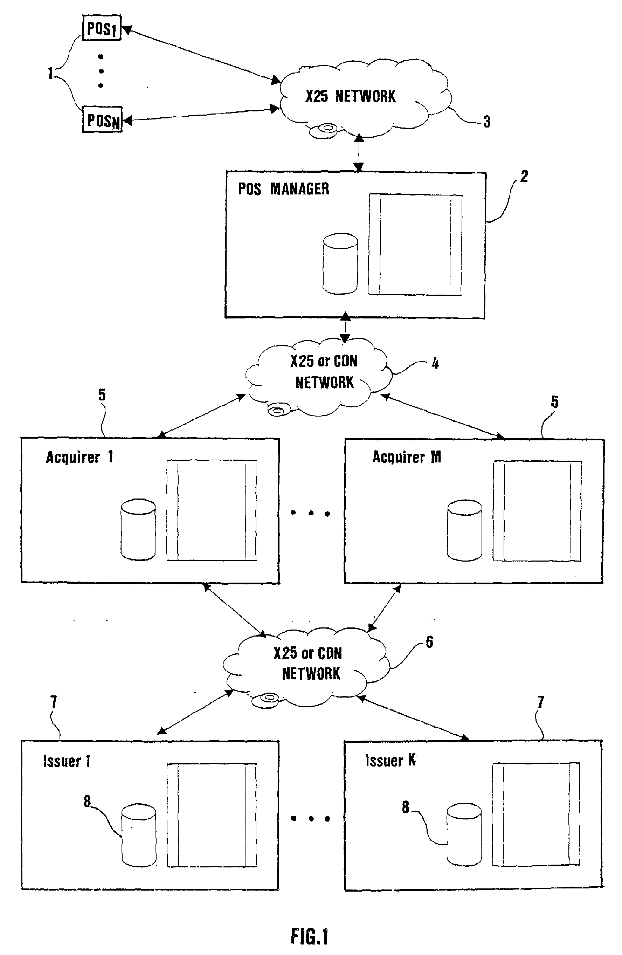

With initial reference to Fig. 1, a commonly used architecture of a system for carrying out electronic financial transactions is shown.

A plurality of terminals 1, e.g., POS terminals (POS1, ..., POSN), are connected to a POS manager 2 via a dedicated first data transmission network 3, e.g., a network based on the X25 protocol, or on other equivalent protocols.

The POS manager 3 is in turn connected to a second network 4 of the abovedescribed type (X25, CDN, etc.).

Via the network 4, the POS manager 2 communicates with the bodies managing the tradespersons (Acquirers).

In particular, a plurality of Acquirers 5 (Acquirer 1, ..., Acquirer M) are connected to the network 4 and receive the transaction data sent by the POS manager 2.

The Acquirers 5 are in turn connected to a third network 6, always of the abovedescribed traditional type (X25, CDN, etc.), and to one or more member managing bodies 7 (Issuer 1, ..., Issuer K), e.g., credit card issuing and managing bodies.

The Issuers 7 should in turn receive the transaction data and process it jointly to the members information, stored in internal databases 8, so as to authorize the expense or not.

Due to the technical features of the data transmission networks used, a system of the abovedescribed type does not allow any direct interaction between the members/tradespersons, the POS managers and the Acquirers and/or the Issuers, limiting the possibility of exchanging data and information to the bare essential for carrying out the requested transaction.

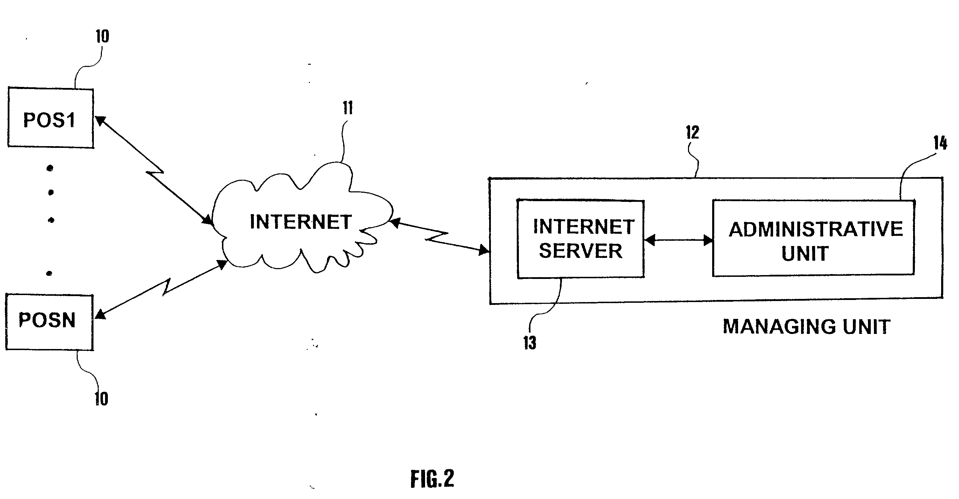

Next, Fig. 2 is a block diagram of a system according to the present invention.

In particular, a plurality of POS-type devices 10 (POS1, ..., POSN) are connected to a IP-type data transmission network 11, e.g., the Internet.

To the network 11, one managing unit 12, apt to transmit and to receive data to and from the devices POS 10, via the former, is connected.

The managing unit 12 comprises a server 13 for interfacing to the Internet network 11. By means of a standard TCP/IP-type transport protocol, the server 13 is apt to dialogue with other on-line devices on the Internet.

To the server 13 an administrating unit 14 (Acquirer/Issuer), i.e., the body appointed to authorize the carrying out of the transaction in progress, is connected.

Each device 10 is, according to the present invention, a terminal having telephone function, comprising a modem for connecting to the Internet.

Alternatively, each device 10 could be connected to a data network, e.g., by a network card.

Advantageously, each device 10 comprises input/output devices, e.g., an LCD and an alphanumeric keyboard for implementing a user interface.

Moreover, each device 10 comprises a card (magnetic strip card, smartcard and/or chip card) reader and a printing unit for the printing of receipts, coupons, etc..

Each device 10 is managed by a microprocessor control unit which, by means of a dedicated software, manages the abovedescribed peripherals and the communication protocols, in particular the PPP protocol for connecting to the Internet and the TCP/IP protocol for communicating on the Internet.

Examples of transactions which may be carried out with a system according to the present invention are: authorize request, transfer and cash-advance, and even ticket selling, information request, etc.

A transaction performed with a system according to the present invention is typically carried out as follows.

Considering, e.g., a transaction related to a credit card purchase, the routine starts with the 'swipe' of the credit card into the card reader of one of the POS terminals 10.

Then, the software of the terminal reads and stores the card data and forwards a telephone call to a general ISP (Internet Service Provider), using the standard PPP transmission protocol.

Therefore, an ID code and a password are sent in order to enable the authentication to the service of the ISP. This authenticating step constitutes a first safety level implemented by the system according to the present invention.

From now on, the data transmission takes place according to a TCP/IP transmission protocol.

Instead, the application protocol is dedicated to the specific application and it provides the encryption of all the transmitted data, except from a serial number of the POS terminal. This serial number is used for the recognition and the decryption of the transmitted data.

The application protocol may substantially be described by four sections:
- the sent and/or the received messages;
- the structure of each message;
- the fields forming each message; and
- the sequence of the sent/received messages.

Each message has a structure comprising a first message portion (header), a second message portion (body) and a third message portion (foot).

The header comprises data related to the version of the application protocol in use, an ID code of the provenance/destination POS terminal, a message identifying code.

The body comprises data useful in the carrying out of the operation provided by the message. In fact, each message is matched by a specific function implemented by the application protocol.

The foot comprises data for checking the message integrity, e.g., CRC codes.

The transaction provides the exchange of three messages between the POS and the Internet server.

The first message is sent from the POS as soon as all the information required to the transaction have been entered.

The message reaches the Server, which recognizes the call and sends the transaction information to the authorizing body, which authorizes/does not authorize the former to transact, after however having stored said information in a first database.

Subsequently, further information, e.g., on the member status and/or related to ads to be sent to the POS to be printed onto the coupon are taken from a second database.

The server, upon receiving a response from the authorizing body, responds to the POS with a second message, comprising all the abovedisclosed information.

In turn, the POS sends a third message of finalized transaction to the server in order to confirm the close of the transaction.

The server, upon receiving the third message, closes the connection, and the transaction may be considered as concluded.

An advantage deriving from this routine is provided by the fact that all transactions are carried out and stored together with the date and time information of the server and not of the individual POSs. This ensures uniformity of the date and time for all performed transactions, which is crucial, e.g., for subsequent inspecting and/or checking steps.

A further advantage is provided by the fact that the server can format (all or part of) the sent data, so as to directly preset the latter to the coupon printing routine. This makes the system extremely flexible and versatile, as it allows an output managing at a higher level than that of the individual POS.

Each transmitted message further comprises an exclusive decryption key, e.g., the serial number of the POS terminal, and it provides control characters for the sending and for the receiving. This constitutes a second safety level.

Advantageously, in order to provide the utmost safety of transaction, several authentication, encryption and message integrity control routines are provided.

In particular, a first POS authentication routine, with an ID code inserted in the message header, is provided.

Alternatively, this authentication may also be provided using digital certificates. The description of this method will not be detailed hereinafter, as it may be construed by those skilled in the art.

A second routine provides the authentication of the member (card holder), e.g., using a chip card, or cell phone SMS messages, or, e.g., with a biometrical identification of the member.

In order to carry out some of these functions, the POS device will advantageously be provided with a telephone communication apparatus which may also operate according to mobile telephony standards, in particular the GSM, the UMTS or the GPRS.

In addition to these authentication routines, the application protocol according to the present invention provides the encryption of the message body, e.g., with a triple DES-type algorithm and a POS-assigned univocal key.

These algorithms are known to the art, and therefore will not be detailed hereinafter.

A further safety level is implemented by checking the integrity of the exchanged messages. This checking takes place, e.g., by means of CRC codes present in the message and checked upon decryption. Moreover, a separate decryption of this codes may be provided.

Lastly, the application protocol implements a managing routine of the encryption keys, preferably based on the use of a master key, known solely to the system manager, and of several individual keys for each POS device, processed in the course of the individual transactions.

Next, figures from 3 to 5 are flow charts related to the modes according to which the messages are managed at the POS, Internet server and authorizing body level.

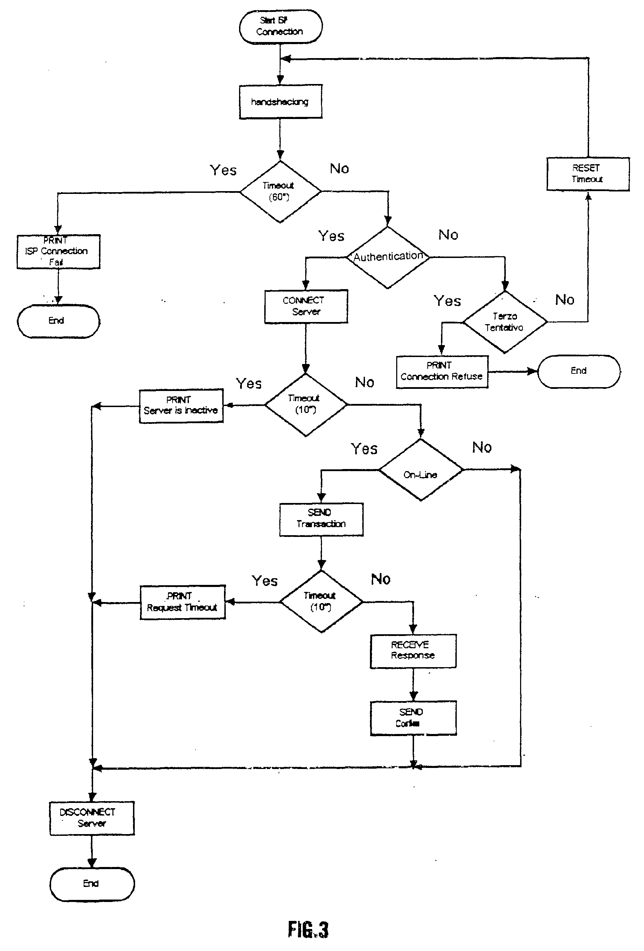

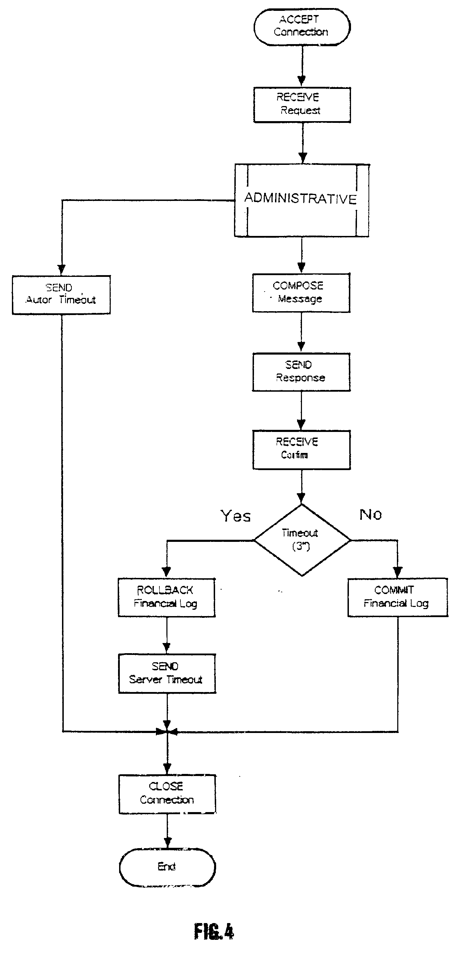

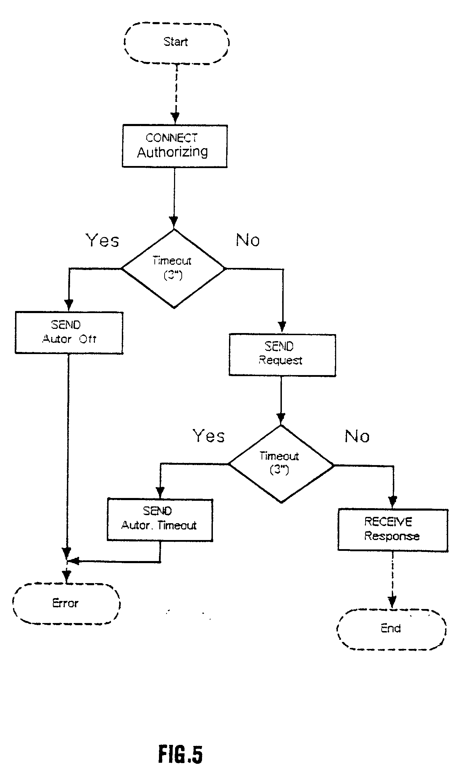

In particular, Fig. 3 describes the POS managing logic, Fig. 4 describes the Internet server logic, whereas Fig. 5 relates to the authorizing body.

The present invention has hereto been described according to a preferred embodiment thereof, disclosed by way of a non-limiting example.

It is understood that other embodiments may be provided, all however to be construed as falling within the protective scope of the present invention, as set forth in the appended claims.

## Claims

1. A system for managing electronic financial transactions, comprising:
- a plurality of devices (10), connected to a data transmission network (11), apt to transmit and to receive data related to financial transactions;
- a managing unit (12), connected to said data transmission network (11),
**characterised in that** said data transmission network (11) is based on a TCP/IP-type transport protocol.

2. The system according to claim 1, wherein said data transmission network (11) is the Internet network.

3. The system according to claim 2, wherein each device of said plurality of devices (10) is apt to connect to said Internet network with a PPP-type protocol.

4. The system according to any one of the preceding claims, wherein said a managing unit (12) comprises a server (13) for interfacing to the network (11).

5. The system according to any one of the preceding claims, wherein said managing unit (12) comprises an administrating unit (14) for authorizing said transactions.

6. The system according to any one of the preceding claims, wherein the dialogue of said devices (10) with said server (13) takes place by means of an application protocol based on the exchange of one or more messages.

7. The system according to claim 6, wherein each message of said one or more messages comprises a first message portion (header).

8. The system according to claim 6 or 7, wherein each message of said one or more messages comprises a second message portion (body).

9. The system according to any one of the claims 6 to 8, wherein each message of said one or more messages comprises a third message portion (foot).

10. The system according to any one of the claims 6 to 9, wherein each message of said one or more messages is matched by a specific function implemented by said application protocol.

11. The system according to claim 7, wherein said first message portion (header) comprises data related to the version of said application protocol in use, an ID code of the provenance/destination device (10), and a message identifying code.

12. The system according to claim 8, wherein said second message portion (body) comprises data for carrying out a predetermined operation.

13. The system according to claim 9, wherein said third message portion (foot) comprises data for checking the integrity of the message.

14. The system according to claim 13, wherein said data for checking the integrity of the message are CRC codes.

15. The system according to any one of the claims 6 to 14, wherein each message of said one or more messages is encrypted.

16. The system according to claim 15, wherein each message of said one or more messages further comprises an exclusive decryption key.

17. The system according to claim 16, wherein said exclusive decryption key is obtainable from an ID code of a device (10).

18. The system according to any one of the claims 15 to 17, wherein the encryption of said messages is carried out with a triple DES-type algorithm.

19. A device (10) for connecting to a data transmission network (11), **characterized in that** it comprises:
- a device for connecting to said network (11);
- input/output devices; and
- a microprocessor control unit.

20. The device according to claim 19, wherein said device for connecting to said network is a modem.

21. The device according to claim 19, wherein said device for connecting to said network is a network card.

22. The device according to any one of the claims 19 to 21, further comprising a printing unit.

23. The device according to any one of the claims 19 to 22, wherein said input/output devices comprise an LCD and an alphanumeric keyboard.

24. The device according to any one of the claims 19 to 23, further comprising a card reader.

25. The device according to claim 24, wherein said cards are magnetic strip cards.

26. The device according to claim 24 or 25, wherein said cards are smartcard-type cards.

27. The device according to any one of the claims 24 to 26, wherein said cards are chip card-type cards.

28. The device according to any one of the claims 19 to 27, wherein said microprocessor control unit comprises a software apt to manage communication protocols.

29. The device according to claim 28, wherein said communication protocols comprise a PPP protocol for connecting to said network (11).

30. The device according to claim 28 or 29, wherein said communication protocols comprise a TCP/IP protocol for communicating on said network (11).

31. The device according to any one of the claims 19 to 30, further comprising a telephone communication apparatus.

32. The device according to claim 31, wherein said telephone communication apparatus operates according to a mobile telephony standard.

33. The device according to claim 32, wherein said standard is the GSM standard.

34. The device according to claim 32, wherein said standard is the UMTS standard.

35. The device according to claim 32, wherein said standard is the GPRS standard.
